(19) Europäisches Patentamt
European Patent Office
Office européen des brevets

(11) **EP 4 219 607 A1**

(12) **EUROPEAN PATENT APPLICATION**

(43) Date of publication:
**02.08.2023 Bulletin 2023/31**

(21) Application number: **23150685.8**

(22) Date of filing: **09.01.2023**

(51) International Patent Classification (IPC):
**C08J 9/00** $^{(2006.01)}$     **C08J 9/12** $^{(2006.01)}$
**C08J 9/14** $^{(2006.01)}$

(52) Cooperative Patent Classification (CPC):
**C08J 9/0071; C08J 9/0023; C08J 9/122;**
**C08J 9/144;** C08J 2201/03; C08J 2203/06;
C08J 2203/162; C08J 2203/18; C08J 2300/16;
C08J 2367/04

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.01.2022 JP 2022011976**
**06.09.2022 JP 2022141403**

(71) Applicant: **Ricoh Company, Ltd.**
**Tokyo 143-8555 (JP)**

(72) Inventors:
• **MIKI, Tomoharu**
  **Tokyo, 143-8555 (JP)**
• **TANAKA, Chiaki**
  **Tokyo, 143-8555 (JP)**
• **NEMOTO, Taichi**
  **Tokyo, 143-8555 (JP)**

(74) Representative: **Marks & Clerk LLP**
  **15 Fetter Lane**
  **London EC4A 1BW (GB)**

(54) **FOAM SHEET**

(57)     A foam sheet contains an aliphatic polyester resin, a nucleating agent for foaming, and hydrofluoroolefin, wherein the nucleating agent accounts for 0.05 to 2 percent by mass of the foam sheet.

EP 4 219 607 A1

**Description**

BACKGROUND

Technical Field

The present disclosure is related to a foam sheet.

Description of the Related Art

Plastic products are processed to have forms such as bags or containers, which are widely distributed. Of these, foam sheets produced by expanding plastic have excellent insulation or cushioning and light-weight. Therefore, they are massively used as cushioning materials and food containers.

Producing plastic foam sheets using $CO_2$ supercritical fluid have been researched based on common technologies. However, sheets with a high expansion ratio is not readily manufactured because corrugated or folded structures are produced due to an abrupt volume inflation of $CO_2$ inside a die. These structures do not have a uniform foam diameter, resulting in a sheet having a rough and non-uniform surface. Such non-uniform diameters or surfaces cause breakage of sheets during mold-processing.

Biodegradable or biorecyclable foams have been proposed in Japanese Translation of PCT International Application Publication No. JP-T-2013-506032 (Japanese Patent No. 6265597). The biodegradable or biorecyclable foam contains a polylactic acid composition, carbon dioxide, 2,3,3,3-tetrafuloro propene (HFO-1234yf): trans-1.3.3.3-tetrafuloro propene (trans-HFO-1234ze), and a co-blowing agent selected from the group consisting of mixtures of the polylactic acid composition, carbon dioxide, and 2,3,3,3-tetrafuloro propene (HFO-1234yf).

However, the technologies disclosed in Japanese Translation of PCT International Application Publication No. JP-T-2013-506032 mentioned above still suffer the issue of a sheet having a rough and non-uniform surface and breakage of sheets during mold-processing.

SUMMARY

According to embodiments of the present disclosure, an improved foam sheet is provided which has a uniform foam diameter and a surface uniformity even at a high expansion ratio.

According to embodiments of the present disclosure, a foam sheet is provided which contains an aliphatic polyester resin, a nucleating agent for foaming, and hydrofluoroolefin, wherein the nucleating agent accounts for 0.05 to 2 percent by mass of the foam sheet.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

    FIG. 1 is a schematic diagram illustrating an example of the continuous kneading device for use in manufacturing a composition containing an aliphatic polyester resin; and
    FIG. 2 is a schematic diagram illustrating an example of the continuous foaming device for manufacturing the foam sheet according to an embodiment of the present disclosure.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

DESCRIPTION OF THE EMBODIMENTS

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Embodiments of the present invention are described in detail below with reference to accompanying drawings. In describing embodiments illustrated in the drawings, specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

The terms of image forming, recording, and printing in the present disclosure represent the same meaning.

Also, recording media, media, and print substrates in the present disclosure have the same meaning unless otherwise specified.

Embodiments of the present disclosure are described in detail below.

The foam sheet of the present disclosure contains an aliphatic polyester resin, a nucleating agent for foaming, and a hydrofluoroolefin (HFO) as a foaming agent and the nucleating agent accounts for 0.05 to 2 percent by mass of the foam sheet.

One way of manufacturing the foam sheet of the present disclosure is to add a nucleating agent for foaming to a foaming agent produced by mixing $CO_2$ and HFO in extrusion, thereby forming a sheet having a uniform foaming diameter and a uniform or flat surface. Since $CO_2$, as a foaming agent, is likely to diffuse and quickly foam in a die, a corrugated or folded structure is formed inside the die. However, HFO added keeps resin flexible after $CO_2$ diffuses and disappears, thereby minimizing the occurrence of such a corrugated structure. Moreover, the nucleating agent added serves as a starting point of foaming, thereby forming a fine foam sheet having a uniform foaming diameter. As an option, a cross-linking agent is preferably added to increase the stickiness of the resin even when $CO_2$ is present, thereby manufacturing a foam sheet having a higher expansion ratio. Therefore, according to the present disclosure, a foam sheet is provided which has a uniform foam diameter and surface uniformity even at a high expansion ratio.

Aliphatic Polyester Resin Composition

The foam sheet of the present disclosure is manufactured by foaming an aliphatic polyester resin composition.

The composition contains at least an aliphatic polyester resin, a nucleating agent for foaming, and hydrofluoroolefin (HFO) as a foaming agent.

Aliphatic Polyester Resin

Specific examples of the aliphatic polyester resin include, but are not limited to, polylactic acid, polyglycol acid, poly(3-hydroxy butylate), poly(3-hydroxybutylate·3-hydroxyhexanoate), poly(3-hydroxy butylate·3-hydroxy parylate), polycaprolactone, polybutylene succinate, and poly(butylene succinate·adipate).

Of these, aliphatic polyester resin is preferable which is biodegradable by microorganism and an environment-friendly polymer material being a low burden on the environment. In particular, polylactic acid is preferable because it is a relatively inexpensive carbon neutral material.

Polylactic Acid

Polylactic acid is one of the aliphatic polyester resins, which is a polymer formed by polymerization of lactic acid by ester bond. Polylactic acid is a polymer material, which is biodegradable by microorganism, environment-friendly, and low environment burden (refer to Structure, Properties, Biodegradability of Aliphatic Polyesters, Polymer on pp 374 to 377, June edition, vol. 50, published in 2001.)

Lactic acid constituting polylactic acid is either or both of D-form (D-lactic acid) and L-form (L-lactic acid).

Examples of polylactic acid include, but are not limited to, monopolymers of D-form lactic acid, monopolymers of L-form lactic acid, copolymers of D-form lactic acid and L-form lactic acid (DL-form lactic acid), and ring opening polymers of one or more lactides selected from the group consisting of D-form lactide, L-form lactide, and DL-form lactide. These can be used alone or in combination.

When a copolymer of D-form lactic acid and L-form lactic acid is used as polylactic acid, the proportion of D-form lactic acid and L-form lactic acid is not particularly limited and can be suitably selected to suit to a particular application. As the minor enantiomer decreases in a copolymer of D-form lactic acid and L-form lactic acid, the crystallinity of the copolymer is likely to increase, leading to a rise in the melting point and glass transition temperature. Conversely, as the minor enantiomer increases, the crystallinity of the copolymer is likely to decrease, so that the crystallinity lowers and the copolymer becomes non-crystalline over time. Although crystallinity is related to the thermal resistance of a foam sheet and the molding temperature during foaming, it can be determined to suit to a particular application and is not particularly limited.

Crystallinity means the degree or speed of crystallization. High crystallinity means highly crystallized and/or quickly crystallized.

Polylactic acid can be synthesized or procured.

The proportion of polylactic acid is preferably 98 percent by mass or greater and more preferably 99 percent by mass or greater to the entire of the organic substances in a foam sheet related to an embodiment in terms of biodegradability or recyclability. A proportion of polylactic acid of 98 percent by mass or greater prevents non-biodegraded component from remaining even when and after polylactic acid is biodegraded.

The proportion of lactic acid in polylactic acid can be calculated from the materials forming polylactic acid.

When the material ratio is unknown, one way of identifying it is to analyze the material with gas chromatography mass spectrometry (GC-MS), followed by comparing the analysis with a known polyolactic acid as a reference material. Optionally, it is possible to use the spectral area ratio obtained by nuclear magnetic resonance (NMR) and other analysis in combination. In the case of GC-MS, the proportion of polylactic acid can be measured under the following conditions.

Measuring by GC-MS

- GC-MS: QP2010, manufactured by Shimadzu Corporation, assisting device, EGA/PY 3030D, manufactured by Frontier Laboratories Ltd.
- Separation column: Ultra ALLOY UA5-30M-0.25F, manufactured by Frontier Laboratories Ltd.
- Heating temperature of sample: 300 degrees C
- Column oven temperature: 50 degrees C (kept for one minute), followed by raising the temperature to 320 degrees C at a temperature rising speed of 15 degrees C per minute, and kept at 320 degrees C for six minutes
- Ionization method: Electron Ionization (E.I method)
- Mass detection range: 25 to 700 (m/z)

In the present disclosure, using the following optional resins is suitable: styrene-based monopolymers such as polystyrene and poly-p-methylstyrene; styrene-based copolymers such as styrene-maleic anhydride copolymers, styrene-acrylonitrile copolymers, styrene-butadiene copolymers, styrene-acrylonitrile-butadiene copolymers, styrene-acrylic acid copolymers, and styrene-methacrylic acid copolymers, and styrene-based resin such as a mixture of polystyrene and polyphenylene oxide.

Nucleating Agent for Foaming

The nucleating agent for foaming mentioned above (also hereinafter referred to as filler) is to control the state of foaming of a foam sheet including the size of foams, quantity, and disposition.

The filler includes inorganic fillers and organic fillers. These can be used alone or in combination.

Specific examples of the inorganic filler include, but are not limited to, talc, kaolin, calcium carbonate, layered silicate, zinc carbonate, wollastonite, silica, alumina, magnesium oxide, calcium silicate, sodium aluminate, calcium aluminate, sodium aluminosilicate, magnesium silicate, glass balloon, carbon black, zinc oxide, antimony trioxide, zeolite, hydrotalcite, metal fiber, metal whisker, ceramic whisker, potassium titanate, boron nitride, graphite, glass fiber, and carbon fiber.

Specific examples of the organic filler include, but are not limited to, natural polymers such as starch, cellulose fine particles, wood flour, bean curd refuse, chaff, and bran, modified products thereof, sorbitol compounds, benzoic acid, and their metal salts, metal salts of phosphoric acid esters, and rosin compounds.

Of these, silica as an inorganic nucleating agent is preferable in terms of affinity with compressed fluid, which is described later. If a filler other than silica is mainly used, it is preferably surface-treated with silica.

The major component of silica is silicon dioxide represented by $SiO_2$. Silica is classified into two by the manufacturing method, dry method silica and wet method silica. In the present disclosure both silicas are suitable.

Silica is preferably surface-treated by an optional reactive compound such as a silane coupling agent, titanate coupling agent, and organo siloxane.

Silica particles are suitably surface-treated with a silane coupling agent.

Specific examples include, but are not limited to, vinyltrimethoxy silane, γ-glycidoxy propyl trimethoxy silane, γ-methacryloxy propyl trimethoxy silane, γ-aminopropyl trimethoxy silane, and γ-mercapto propyl trimethoxy silane.

The proportion of silica to the entire of the inorganic substances in a foam sheet is preferably 50 percent by mass or greater and more preferably 60 percent or greater in the case of a filler surface-treated with silica or a combinational use of silica and a filler other than silica. A proportion of silica of 50 percent by mass or greater makes fine and uniform foams. The lower limit of the proportion of a filler is preferably 20 percent by mass or greater to the entire of the inorganic substances in a foam sheet.

The filler mentioned above preferably has a number average particle diameter of from 0.005 to 0.1 $\mu$m and more preferably from 0.01 to 0.08 $\mu$m. A number average particle diameter of 0.005 $\mu$m or greater enhances dispersibility, thereby enhancing the properties of a sheet such as impact strength of an obtained foam sheet. A number average particle diameter of 0.1 $\mu$m or less enhances the appearance of the surface of an obtained foam sheet.

The average particle diameter of a filler can be represented by BET specific surface area assuming that the filler is truly spherical for convenience. The BET specific surface area corresponding to the average particle diameter is from 23 to 230 m$^2$/g.

$$\text{BET specific surface area } (m^2/g) = \text{specific surface area of a particle} / \text{mass of the particle} = 3 / (\text{average particle diameter} / 2) \times \text{true specific gravity} = 3 / (\text{average particle diameter} / 2) / (\text{true specific gravity} \times 10^6)$$

$$* \text{ mass of a particle: } (\text{average diameter} / 2)^3 \times 4 / 3 \times 3.14 \times \text{true specific gravity } (2.65) \times 10^6$$

$$(\text{g per particle})$$

Specific surface area of a particle: $(\text{average particle diameter} / 2)^2 \times 4 \times 3.14$

The standard deviation $\sigma$ of the number average particle diameter of a filler is preferably a factor of three or less or more preferably a factor of two or less to the number average particle diameter. A standard deviation $\sigma$ within the specified range achieves uniform foaming of a foam sheet.

The standard deviation of a filler is correlated to the standard deviation of foaming. Namely, the standard deviation of a filler within the range specified above indicates that foaming is uniform.

The proportion of coarse particles having a particle diameter of 10 $\mu$m or greater of a filler is preferably 100 particles or less and more preferably 40 particles or less per gram of foam sheet. When a number of coarse particles is 100 or less, the foam particle is fine, which enhances properties such as appearance and strength.

The proportion of coarse particles can be measured by remelting 50 mg of a foam sheet to obtain a thin film having a thickness of 10 $\mu$m and counting the coarse particles attributable to a filler having a particle diameter of 10 $\mu$m or greate with an optical microscope (FX-21, a factor of 100, manufactured by Nikon Corporation).

The hydrophobicity of a filler is preferably from 50 percent by mass or greater and more preferably 60 percent by mass. The hydrophobicity means methanol wettability. A hydrophobicity of 50 percent by mass or greater inhibits hygroscopicity, thereby preventing aggregation of fillers in an aliphatic polyester resin. Moreover, this hydrophobicity in the range inhibits a side effect such as hydrolysis of an aliphatic polyester resin due to moisture when a filler is introduced into the aliphatic polyester resin.

Hydrophobicity is measured by: adding methanol during stirring to 50 ml of pure water where 1 g of filler is floating; and obtaining the quantity of methanol added in percent by mass to suspend the entire filler in pure water.

The filler preferably has a pH of 6.5 or less, more preferably from 3.5 to 6.5, and furthermore preferably from 4 to 6. pH of a filler means pH of the surface of the filler obtained in a 4 percent liquid dispersion (ratio of water to methanol at 1:1) of the filler. A pH of 6.5 or less prevents aggregation of fillers. A pH of 3.5 or greater prevents degradation of aliphatic polyester resin.

The following explains the pH range mentioned above of filler. When carbon dioxide is used as a foaming agent, particles tend to agglomerate at the isoelectric point of a filler liquid dispersion if carbon dioxide is considered as a dispersion medium of the filler. Taking into account that carbon dioxide has an ionization potential of 13.7 eV and an electron affinity of 3.8 eV, carbon dioxide is electrophilic, so that there should be the surface state of a filler optimal for dispersion.

pH of a filler is obtained by measuring the pH of a liquid suspension (volume ratio of water to methanol at 1:1) having a proportion of a nucleating agent for foaming of 4 percent.

Even after the foam sheet is manufactured, the hydrophobicity and pH of a filler can be evaluated by analyzing a filler taken out from a resulting substance, which is obtained by dissolving a foam sheet in a solvent followed by filtering the aliphatic polyester resin component.

Alternatively, the filler in a foam sheet obtained can be evaluated for ash components which are obtained by burning the foam sheet in an electric furnace.

The proportion of a filler can be suitably selected to suit to a particular application as long as it does not degrade the property of a foam sheet. It is preferably from 0.05 to 2 percent by mass and more preferably from 0.1 to 1 percent by mass to the entire of a foam sheet. A proportion of filler of from 0.05 to 2 percent by mass inhibits aggregation of filler particles.

Cross-linking Agent

The aliphatic polyester resin of the present disclosure may contain a cross-linking agent. As a cross-linking agent, (meth)acrylic acid ester compound having two or more (meth)acrylic groups in a molecule or a (meth)acrylic acid ester compound having one or more (meth)acrylic group and one or more glycidyl group or vinyl group in a molecule is preferable because they are highly reactive with polylactic acid so that their monomers are unlikely to remain, which inhibits coloring the resin.

Specific examples of such compounds include, glycidyl methacrylate, glycidyl acrylate, glycerol dimethacrylate, trimethylolpropane trimethacrylate, trimethylolpropane triacrylate, aryloxypolyethylene glycol monoacrylate, aryloxypolyethylene glycol monomethacrylate, polyethylene glycol dimethacrylate, polyethylene glycol diacrylate, polypropylene glycol dimethacrylate, polypropylene glycol diacrylate, polytetramethylene glycol dimethacrylate, copolymers of alkylenes having the alkylene glycol portions thereof with various lengths, butanediol methacrylate, and butanediol acrylate.

Cross-linking agents impart melting tension, thereby adjusting the expansion ratio of a foam sheet.

There are methods of imparting melting tension, including a method of dispersing a nucleating agent for foaming such as a layered silicate at a nano order, a method of cross-linking a resin composition using a cross-linking agent or a cross-linking helping agent, a method of cross-linking a resin composition with electron beams, and a method of adding another resin composition having a high melting tension. A sheet having a high melting tension due to a cross-linking agent expands well during mold-processing, preventing breakage of the sheet.

The proportion of a cross-linking agent in an aliphatic polyester resin composition is preferably from 0.1 to 2.0 percent by mass and more preferably from 0.3 to 1.5 percent by mass to the entire of an aliphatic polyester resin composition.

Method of Manufacturing Foam Sheet

The method of manufacturing the foam sheet of the present disclosure includes kneading, foaming, and other optional processing.

Kneading and foaming can be executed simultaneously or separately.

Kneading

In the kneading, aliphatic polyester resin and a nucleating agent for foaming are kneaded.

In the kneading, a foaming agent can be added to quickly foam.

A cross-linking agent, antioxidant, colorant, absorbent for rays, anti-static agent, and electroconductive agent can be kneaded together to suit to a particular application of a molded product.

The resin, nucleating agent, and other additives can be kneaded under the presence of a compressible fluid to increase the speed of foaming or kneading.

A mixture produced in the intermediate process in the course of obtaining plastic, a filler, and a final product is also referred to as a plastic composition or master batch.

Foaming Agent

Specific examples of the foaming agent include, but are not limited to, hydrocarbons such as lower alkanes such as propane, n-butane, isobutane, n-pentane, isopentane, and hexane; ethers such as dimethyl ether; halogenated hydrocarbons such as methyl chloride and ethyl chloride; and physical foaming agents such as compressive gas to obtain a foamed plastic sheet having a high expansion ratio.

Of these, it is preferable to use compressible gas, which is described later, because the gas is odorless, safely handled, and friendly to the environment. A combinational use of the above with a co-blowing agent is allowed.

Of halogenated hydrocarbons, hydrofluoroolefin is used in the present disclosure. Hydrofluoroolefin is a non-flammable compound. This compound is a gas at normal temperature and pressure (30 degrees C., 1 atm) and can be handled as a liquid at normal pressure by cooling. In addition, hydrofluoroolefin has an ozone depletion potential (ODP) of about 0 and a global warming potential (GWP) of about 20 or less, which is greatly environment-friendly.

Specific examples of hydrofluoroolefin include, but are not limited to, 1-chloro-3,3,3-trifluoropropene, Z)-1-chloro-2,3,3,3-tetrafluoropropene, 2-chloro-3,3,3-trifluoropropene, dichloro-fluoropropene, 1,3,3,3-tetrafluoropropene, 2,3,3,3-tetrafluoropropene, 1,2,3,3,3-pentafluoropropene, 1,1,3,3,3-pentafluoropropene, trans-1,1,1,4,4,4-hexafluoro-2-butene, cis-1,1,1,4,4,4-hexafluoro-2-butene, and cis- and trans-forms thereof. These can be used alone or in combination. Of these, 1-chloro-3,3,3-trifluoropropene is preferable because it is likely to be liquid at normal pressure.

1-chloro-3,3,3-trifluoropropene can be synthesized or procured.

Specific examples of the marketed products include, but are not limited to, HFO-1233zd (E), manufactured by CENTRAL GLASS CO., LTD. One way of synthesizing hydrofluoroolefin is disclosed in Japanese Patent No. 4864714.

Since hydrofluoroolefin is a gas at normal temperature and normal pressure and can be handled as a liquid at normal pressure by slight cooling, it does not need a heavy facility such as a pressure-resistant mechanism but can be handled with a simple facility. In addition, hydrofluoroolefin can be handled with a simple facility having a slight pressure resistant mechanism even when hydrofluoroolefin is treated as a heated liquid. For example, HFO-1233zd (E) has a vapor pressure of about 0.4 MPa at 60 degrees C.

The amount of hydrofluoroolefin used against an aliphatic polyester resin is preferably from 1 to 15 percent by mass and more preferably from 2 to 10 percent by mass.

Sum of Organic Substance and Amount of Inorganic Nucleating Agent for Foaming

The sum of the organic substances in a foam sheet can be estimated as the amount other than that of ashes (inorganic components). The amount of ashes can be considered as the amount of inorganic nucleating agent for foaming. Ashes mean a residue remaining after combustion at 600 degrees C for four hours.

The ashes are measured in the following manner. A total of 3 g of a foamed sheet sample is weighed to the fourth decimal place with a precision balance and then charged in a 100 ml crucible. The sum of the sample and crucible is precisely weighed. The crucible is placed in a muffloe furnace FP-310, manufactured by Yamato Scientific Co., Ltd. and combusted at 600 degrees C for four hours for combusting the organic components. Thereafter, the crucible is cooled in a dessicator for one hour. The crucible was precisely weighed again to obtain the sum of the crucible and ashes.

The amount of ashes, i.e., the amount of inorganic nucleating agent for foaming, and the entire of the organic substances are calculated according to the following relationship.

$$\text{The amount of inorganic nucleating agent for foaming (percent)} = \text{amount of ashes (percent)} = (\text{total mass (g) of crucible and sample after combustion and cooling - mass (g) of crucible)} / (\text{total mass (g) of crucible and sample before combustion - mass (g) of crucible)} \times 100$$

$$\text{Total mass of organic substances (percent)} = 100 - \text{amount of ashes (percent)}$$

This measuring is conducted twice and the average is calculated.

Compressible Gas

Specific examples of the substance that can be used as a compressive gas include, but are not limited to, carbon monoxide, carbon dioxide, dinitrogen monoxide, nitrogen, methane, ethane, propane, 2, 3-dimethylbutane, ethylene, and dimethyl ether. Of these, carbon dioxide is preferable because it has a critical pressure of about 7.4 MPa and a critical temperature of about 31 degrees C so that it can be readily brought into a supercritical state. In addition, carbon dioxide is non-flammable and easy to handle.

These can be used alone or in combination.

Since the solubility of a compressive fluid varies depending on the combination of the resin type and the compressive fluid, the temperature, and the pressure, it is suitable to appropriately adjust the amount of the compressive fluid supplied.

For a combination of polylactic acid, filler, carbon dioxide, and hydrofluoroolefin, the amount of carbon dioxide to be supplied is preferably from 2 to 30 percent by mass to the entire of polylactic acid and filler. An amount of 2 percent by mass or greater avoids limiting the plasticizing effect. An amount of 30 percent by mass or less prevents the phase separation of carbon dioxide and polylactic acid, thereby obtaining a foam sheet having a uniform thickness.

The mass ratio of carbon dioxide to hydrofluoroolefin is preferably from 1:0.5 to 1:0.01. It is preferably from 1:0.25 to 1:0.01 taking into the manufacturing cost.

Kneading Device

A kneading device for use in manufacturing an aliphatic polyester resin composition may employ a continuous process or batch process. It is preferable to choose the process considering the device efficiency, product features, and product quality.

Kneading devices include a single-screw extruder, a multi-screw extruder, a kneader, a non-shaft basket type stirring tank, and a tubular polymerization tank equipped with a Vyborac manufactured by Sumitomo Heavy Industries, Ltd., an N-SCR manufactured by Mitsubishi Heavy Industries Ltd., a spectacle blade manufactured by Hitachi, Ltd., a lattice blade or a Kenics type, or a Sulzer type SMI,X type static mixer. These devices can knead a substance at viscosity suitable for kneading. Taking into account the color tone, a self-cleaning polymerization device such as a finisher, an N-SCR, and a twin-screw extrusion ruder may be used. Of these, in terms of the color tone, stability, and heat resistance of resin, a finisher and N-SCR are preferable. A single-screw extruder and a multi-screw extruder are preferable to increase the production efficiency.

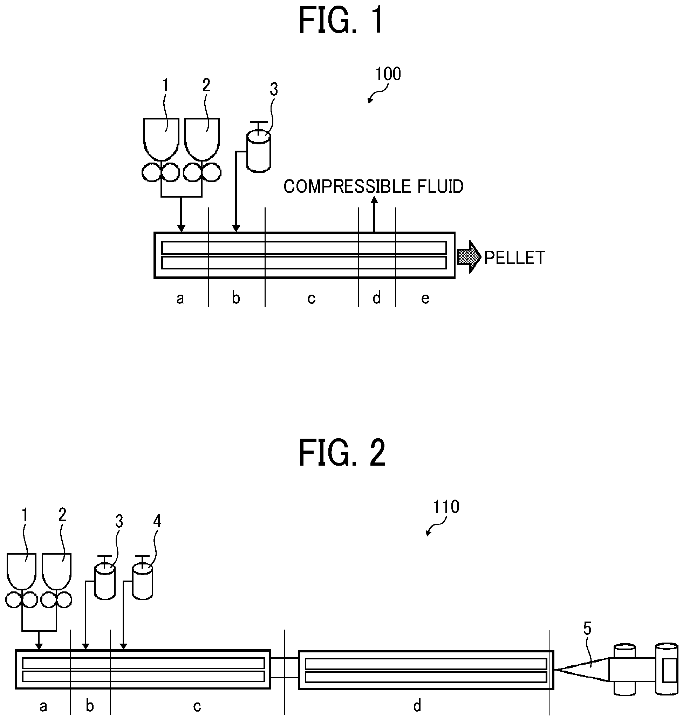

In one embodiment, as illustrated in FIG. 1, a twin-screw extruder (screw aperture of 42mm, L / D = 48, manufactured by The Japan Steel Works LTD.) is used as a continuous kneading device 100 including raw material supplying devices 1 and 2 and a compressive fluid supplying device 3. Both raw material supplying devices 1 and 2 supply raw materials to a raw material mix-melting area a. Then the compressible fluid supplying device 3 supplies compressible fluid to a compressible fluid supplying area b. The raw materials are kneaded at a kneading area c. Thereafter, the compressible fluid is removed from a compressible fluid removing area d followed by foaming to complete the entire process via a mold-processing area e.

Raw Material Mix-Melting Area a

Resin pellets and fillers are mixed and heated at the raw material mix-melting area a. The heating temperature is set to be the melting point of the resin or higher than that. The resin can be thus uniformly mixed with compressive fluid at the compressive fluid supplying area b.

Compressive Fluid Supplying Area b

The resin pellets are melted and fused by heating. Compressible fluid is supplied to plasticize the molten resin while the fillers are wet.

Kneading Area c

The temperature of the kneading area c is adjusted to obtain a suitable viscosity for kneading fillers. The temperature setting is not particularly limited because it varies depending on the specification of the reaction device and the type, structure, and molecular weight of a resin. For procurable polylactic acid having a weight average molecular weight (Mw) of about 200,000, kneading is normally conducted at a temperature range of from 10 degrees C higher than the melting point of the polylactic acid to 20 degrees C higher than that. Conversely, kneading can be conducted with compressive fluid at temperatures lower than the melting point of polylactic acid. It is possible to knead at relatively high viscosities at temperatures below the melting point. Specifically, it is from -20 to -80 degrees and preferably from -30 to -60 degrees C. The temperature can be set based on the current value of a stirring power of a device for convenience.

Foaming

An aliphatic polyester resin composition is foamed by removing compressible fluid.

The compressive fluid can be removed by releasing a pressure.

The temperature during foaming is preferably set to be the melting point of an aliphatic polyester resin or higher than that.

During the foaming, the compressive fluid and hydrofluoroolefin dissolved in an aliphatic polyester resin is vaporized at the interface with the filler and deposited, causing foaming.

Since foaming starts from a filler, the filler is required to be uniformly dispersed in an aliphatic polyester resin to manufacture a uniform foam sheet with fine foams.

As a force for driving a plastic composition to flow during the foaming, it is possible to utilize the pressure from the above-described kneading device or separately dispose a mechanical device such as a single-screw or multi-screw extruder or cylinder.

By adding hydrofluoroolefin acting as a foaming agent, kneading and foaming are conducted while maintaining the flexibility of a resin. Also, by adding a nucleating agent for foaming, the foam diameter can be controlled to be small and uniform. As a result, a foam sheet obtained has an excellent uniformity of the foam diameter and surface of the sheet.

Other Optional Process

The other optional process is not particularly limited and can be suitably selected to suit to a particular application as long as it is normally conducted for manufacturing a foamed plastic sheet. It includes molding to a sheet.

This molding includes, but is not limited to, vacuum forming, pressure forming, and press forming.

According to the molding, a sheet product is obtained.

A foam sheet having a high expansion ratio is excellent to achieve a good cost-efficiency. The expansion ratio is preferably 5 or greater, more preferably 10 or greater, furthermore preferably 20 or greater, particularly preferably 30 or greater, and more particularly preferably 40 or greater. An expansion ratio of 45 or greater degrades the strength of a foam sheet, thereby limiting its application to packing materials. As a packing material, a foam sheet is desired to have a uniform surface to achieve a uniform shock-absorbing. In order to use a foam sheet for secondary molding for forming a substance such as a disposable container or a blister pack, the expansion ratio is preferably from 1 to 30, more preferably from 1 to 10, and furthermore preferably from 1 to 3. For this type of application, a foam sheet is desired to have a uniform surface. A foam sheet having a non-uniform surface causes breakage of a sheet during processing or failure of secondary molding. As described above, the expansion ratio is preferably from 1 to 30 with a uniform surface for an application for a package material.

The expansion ratio of a foam sheet can be controlled by factors such as kneading temperatures, staying time, an atmosphere, the concentration of a foaming agent, the type of a foaming agent, the degree of the uniformity of a foaming agent, the distribution of molecular weight of plastic, and the speed of discharging. These can be combined for adjusting the expansion ratio.

A foam sheet of the present disclosure manufactured as described above contains hydrofluoroolefin (HFP) of 150 ppm or greater and preferably from 300 to 2,200 ppm.

The thickness of the foam sheet of the present disclosure is preferably from 0.5 to 5 mm and more preferably 1 mm or greater in terms of thermal insulation. It is more preferably 4 mm or less considering processability.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

The present disclosure is described in detail below referring to Examples, but is not limited thereto.

Example 1

Manufacturing of Foam Sheet

Preparation of Master Batch

The continuous kneading device 100 illustrated in FIG. 1 supplies 9.7 kg/hr of polylactic acid (Revode 110, melting point of 160 degrees C, manufactured by Zhejiang Hisun Biomaterials Co., Ltd.), 0.3 kg/hr of surface treated silica (R202, manufactured by Evonik Operations Gmbh) as nucleating agent for foaming to make the sum of flowing of polylactic acid and nucleating agent at 10 kg/hr to the raw material mix-melting area a. Next, carbon dioxide as compressible fluid was supplied to the compressible fluid supply area b at 1.00 kg/hr (equivalent to 10 percent by mass to a composition) to knead at the kneading area c. Resultantly, precursors of a polylactic acid composition containing a filler in an amount of 3 percent by mass were obtained.

"To a composition" in the amount of carbon dioxide supplied mentioned above means to the sum of polylactic acid and nucleating agent for foaming.

Then at the mold-processing area e, the precursors of a polylactic acid composition containing a filler in an amount of 3 percent by mass was extruded to a water bath in a strand form. Subsequent to cooling in water bathing, the resulting substance was pelletized with a strand cutter to obtain a master batch containing a filler at 3 percent by mass (3 percent by mass filler master batch).

The temperature at each zone was as follows for the preparation of the master batch mentioned above.

Raw material mix-melting area a and compressive fluid supply area b: 190 degrees C
Kneading area c: 150 degrees C

Compressive fluid removing area d: 190 degrees C
Mold-processing area e: 190 degrees C
The pressure applied at each area was as follows:

Compressive fluid supply area b to kneading area c: 7.0 MPa
Compressive fluid removing area d: 0.5 MPa

Manufacturing of Foam Sheet

A continuous foam sheet manufacturing device 110 illustrated in FIG. 2 was prepared.
The continuous foam sheet manufacturing device 110 includes two twin screw extruders linked to each other. The first twin screw extruder includes the raw material mix-melting area a, the compressive fluid supply area b, and the kneading area c.
The second twin screw extruder includes the compressive fluid removing area d and an extrusion molding part 5 (mold-processing area e) equipped with a circular die having a slit aperture of 70 mm capable of forming a particular shape.
The raw material supplying devices 1 and 2 in the continuous foam sheet manufacturing device 110 supplied the 3 percent by mass filler master batch, polylactic acid resin, and a cross-linking agent. Specifically, 1.67 kg/hr of the 3 percent by mass filler master batch obtained, 8.33 kg/hr of polylactic acid resin (Revode 110, melting point of 160 degrees C, manufactured by Zhejiang Hisun Biomaterials Co., Ltd.) to make the entire amount of flowing the master batch and polylactic acid resin 10 kg/hr and contain 0.5 percent by mass of a filler in an obtained foam sheet, and 0.07 kg/hr (corresponding to 0.7 percent by mass to quantity of the organic component) of glycidyl compound (Joncryl ADR 4368C, manufactured by BASF SE) as cross-linking agent were supplied to the raw material mix-melting area a of the first extruder. Subsequently, the compressive fluid supplying device 3 supplied 0.66 kg/hr (corresponding to 6.66 percent by mass to a composition) of carbon dioxide as compressive fluid to the compressive fluid supply area b and a supplying system 4 supplied 0.33 kg/hr (corresponding to 3.33 percent by mass to a composition) of hydrofluoroolefin (HFO: trans-1-chloro-3,3,3-trifluoro propene) to the kneading area c, where carbon dioxide and hydrofluoroolefin were kneaded. Next, the temperature of the resin was cooled down to 140 degrees C at the compressive fluid removing area d in the second extruder to remove the compressive fluid to blow by extrusion, thereby forming a foam sheet at the extrusion molding part 5. The amount discharged in the die of the extrusion molding part 5 was set at 10 kg/hr and the temperature of the resin was set at 167 degrees C. Next, the foam sheet obtained was placed along the cooled mandrel and air was sprayed to the exterior of the sheet from an airing for cool molding, followed by cutting with a cutter to obtain a flat sheet. The foam sheet of Example 1 was obtained.
The temperature at each zone was as follows for the preparation of the foam sheet mentioned above.

Raw material mix-melting area a and compressive fluid supply area b: 190 degrees C
Kneading area c: 150 degrees C
The pressure applied at each area was as follows:
Compressive fluid supply area b to kneading area c: 7.0 MPa

Method of Evaluating Foam Sheet

The expansion ratio of a foam sheet is obtained by dividing the density (true density $\rho0$) of the composition forming the foam sheet by the bulk density ($\rho1$) of the composition as in Relationship 1 below.

$$\text{Expansion ratio} = \text{true density } (\rho0) \,/\, \text{bulk density } (\rho1) \qquad \text{Relationship 1}$$

The true density represents the density of the plastic composition remaining as the final plastic composition and can be obtained from reference values or measured for non-foaming compound pellets. Polylactic acid has a true density of about 1.25 $g/cm^3$.
The method of measuring the bulk density is not particularly limited. One way of measuring the bulk density is as follows. The exterior dimensions of a foam sheet allowed to leave at 23 degrees C and a relative humidity of 50 percent for 24 hours or longer are measured to obtain the bulk volume. Then the foam sheet is weighed. The mass of the foam sheet is divided by the bulk volume to obtain the bulk density of the foam sheet.

Average Thickness

The thickness of a foam sheet was measured at 10 points with a caliper (digimatic caliper, manufactured by Mitutoyo Corporation) to obtain the average thereof.

Number Average Particle Diameter of Filler

The foam sheet was subjected to cross section processing with an ion milling device to observe the cross section with a scanning electron microscope (SEM).

The SEM photo obtained at a factor of 10,000 was binalized into the white component corresponding to the filler and the polylactic acid component using a software (Image-Pro[registered] Premier, created by Media Cybernetics, Inc.). The particle diameter (Feret's diameter) was obtained in the range of 10 $\mu$m $\times$ 7 $\mu$m. The number average particle diameter and the standard deviation were calculated for the white component (filler) having a Feret's diameter of 0.005 $\mu$m or greater.

pH and Hydrophobicity of Filler

pH and hydrophobility were measured in the manner mentioned above.

Quantification of HFO

The foam sheet to be measured was pulverized. A total of 2 parts by mass of 2-propanol was added to 1 part by mass of the pulverized foam sheet obtained followed by dispersion with ultrasonic wave for 30 minutes. Thereafter, the dispersion was stored in a refrigerator at 5 degrees C for one day or longer to extract the organic solvent in the pulverized foam sheet. The supernatant was analyzed with a gas chromatography (GC-14A, manufactured by Shimadzu Corporation to measure the amount of HFO remaining by quantifying HFO in the pulverized foaming sheet. The measuring conditions for the analysis were as follows.

· Device: GC-14A, manufactured by Shimadzu Corporation
· Column: CBP20-M 50-0.25
· Detector: FID
· Amount of infusion: 1 to 5 $\mu$L
· Carrier gas: He 2.5 kg/cm$^2$
· Amount of hydrogen flowing: 0.6 kg/cm$^2$
· Amount of air flowing: 0.5 kg/cm$^2$
· Chart speed: 5mm/min
· Sensitivity: Range 101 $\times$ Atten 20
· Column temperature: 40 degrees C
· Injection temperature: 150 degrees C

Moldability

The moldability was evaluated according to the following method. A test piece of a 300 mm $\times$ 300 mm square shape was cut from a foam sheet. This test piece was heated at 127 degrees C between parallel heated places with a clearance of 2 mm for 30 seconds and then pinched with a dish-shaped die having a length of 180 mm, a width of 100 mm, and a height of 28 mm for 10 seconds. The moldability of the mold product obtained was visually evaluated according to the following evaluation criteria:

A: Mold product without a breakage with corners having a precise molding
B: Mold product having partially thin portions
C: Mold product with breakage A and B are allowable.

The results are shown in Table 1.

Example 2

The foam sheet of Example 2 was obtained in the same manner as in Example 1 except that the amount of supplied carbon dioxide as compressive fluid was changed to 0.80 kg/hr (corresponding to 8 percent by mass to a composition) and the amount of supplied hydrofluoroolefin (HFO: trans-1-chloro-3,3,3-trifluoro propene) was changed to 0.2 kg/hr (corresponding to 2 percent by mass to a composition).

The results are shown in Table 1.

Example 3

The foam sheet of Example 3 was obtained in the same manner as in Example 1 except that the amount of supplied carbon dioxide as compressive fluid was changed to 0.90 kg/hr (corresponding to 9 percent by mass to a composition) and the amount of supplied hydrofluoroolefin (HFO: trans-1-chloro-3,3,3-trifluoro propene) was changed to 0.10 kg/hr (corresponding to 1 percent by mass to a composition).

The results are shown in Table 1.

Example 4

The foam sheet of Example 4 was obtained in the same manner as in Example 1 except that the amount of supplied carbon dioxide as compressive fluid was changed to 0.95 kg/hr (corresponding to 9.5 percent by mass to a composition) and the amount of supplied hydrofluoroolefin (HFO: trans-1-chloro-3,3,3-trifluoro propene) was changed to 0.05 kg/hr (corresponding to 0.5 percent by mass to a composition).

The results are shown in Table 1.

Example 5

The foam sheet of Example 5 was obtained in the same manner as in Example 1 except that the amount of supplied carbon dioxide as compressive fluid was changed to 0.98 kg/hr (corresponding to 9.8 percent by mass to a composition) and the amount of supplied hydrofluoroolefin (HFO: trans-1-chloro-3,3,3-trifluoro propene) was changed to 0.02 kg/hr (corresponding to 0.2 percent by mass)

The results are shown in Table 1.

Example 6

The foam sheet of Example 6 was obtained in the same manner as in Example 1 except that the amount of supplied carbon dioxide as compressive fluid was changed to 0.66 kg/hr (corresponding to 6.66 percent by mass to a composition) and the amount of supplied hydrofluoroolefin of hydrofluoroolefin (HFO: Z)-1-chloro-2,3,3.3-tetrafluoro propene) was changed to 0.33 kg/hr (corresponding to 3.33 percent by mass to a composition).

The results are shown in Table 1.

Example 7

The foam sheet of Example 7 was obtained in the same manner as in Example 1 except that the amount of supplied carbon dioxide as compressive fluid was changed to 0.9 kg/hr (corresponding to 9 percent by mass to a composition) and the amount of supplied hydrofluoroolefin of (HFO: 1-chloro-2,3,3.3-tetrafluoro propene) was changed to 0.1 kg/hr (corresponding to 1.0 percent by mass to a composition).

The results are shown in Table 1.

Example 8

The raw material supplying devices 1 and 2 in the continuous foam sheet manufacturing device 110 illustrated in FIG. 2 supplied the 3 percent by mass filler master batch, polylactic acid resin, and a cross-linking agent. Specifically, 0.167 kg/hr of the 3 percent by mass filler master batch obtained, 9.833 kg/hr of polylactic acid resin (Revode 110, melting point of 160 degrees C, manufactured by Zhejiang Hisun Biomaterials Co., Ltd.) to make the entire amount of flowing the master batch and polylactic acid resin 10 kg/hr and contain 0.05 percent by mass of a filler in an obtained foam sheet, and 0.07 kg/hr (corresponding to 0.7 percent by mass to quantity of the organic component) of glycidyl compound (Joncryl ADR 4368C, manufactured by BASF SE) as cross-linking agent were supplied to the raw material mix-melting area a of the first extruder. Subsequently, the compressive fluid supplying device 3 supplied 0.9 kg/hr (corresponding to 9 percent by mass to a composition) of carbon dioxide as compressive fluid to the compressive fluid supply area b and the supplying system 4 supplied 0.1 kg/hr (corresponding to 1.0 percent by mass to a composition) of hydrofluoroolefin (HFO: trans-1-chloro-3,3,3-trifluoro propene) to the kneading area c, where carbon dioxide and hydrofluoroolefin were kneaded.

The foam sheet of Example 8 was obtained in the same manner as in Example 1 except for the above and evaluated.
The results are shown in Table 1.

Example 9

The raw material supplying devices 1 and 2 in the continuous foam sheet manufacturing device 110 illustrated in FIG. 2 supplied the 3 percent by mass filler master batch, polylactic acid resin, and a cross-linking agent. Specifically, 6.66 kg/hr of the 3 percent by mass filler master batch obtained, 3.33 kg/hr of polylactic acid resin (Revode 110, melting point of 160 degrees C, manufactured by Zhejiang Hisun Biomaterials Co., Ltd.) to make the entire amount of flowing the master batch and polylactic acid resin 10 kg/hr and contain 2 percent by mass of a filler in an obtained foam sheet, and 0.07 kg/hr (corresponding to 0.7 percent by mass to quantity of the organic component) of glycidyl compound (Joncryl ADR 4368C, manufactured by BASF SE) as cross-linking agent were supplied to the raw material mix-melting area a of the first extruder. Subsequently, the compressive fluid supplying device 3 supplied 0.9 kg/hr (corresponding to 9.0 percent by mass to a composition) of carbon dioxide as compressive fluid to the compressive fluid supply area b and the supplying system 4 supplied 0.02 kg/hr (corresponding to 1.0 percent by mass to a composition) of hydrofluoroolefin (HFO: trans-1-chloro-3,3,3-trifluoro propene) to the kneading area c, where carbon dioxide and hydrofluoroolefin were kneaded.
The foam sheet of Example 9 was obtained in the same manner as in Example 1 except for the above and evaluated.
The results are shown in Table 1.

Example 10

The raw material supplying devices 1 and 2 in the continuous foam sheet manufacturing device 110 illustrated in FIG. 2 supplied the 3 percent by mass filler master batch, polylactic acid resin, and a cross-linking agent. Specifically, 1.67 kg/hr of the 3 percent by mass filler master batch obtained, 8.33 kg/hr of polylactic acid resin (Revode 110, melting point of 160 degrees C, manufactured by Zhejiang Hisun Biomaterials Co., Ltd.) to make the entire amount of flowing the master batch and polylactic acid resin 10 kg/hr and contain 0.5 percent by mass of a filler in an obtained foam sheet, and 0.07 kg/hr (corresponding to 0.7 percent by mass to quantity of the organic component) of glycidyl compound (Joncryl ADR 4368C, manufactured by BASF SE) as cross-linking agent were supplied to the raw material mix-melting area a of the first extruder. Subsequently, the compressive fluid supplying device 3 supplied 0.90 kg/hr (corresponding to 9 percent by mass to a composition) of carbon dioxide as compressive fluid to the compressive fluid supply area b and the supplying system 4 supplied 0.33 kg/hr (corresponding to 3.33 percent by mass to a composition) of hydrofluoroolefin (HFO: trans-1-chloro-3,3,3-trifluoro propene) to the kneading area c, where carbon dioxide and hydrofluoroolefin were kneaded. Next, the resin was cooled down to 145 degrees C at the compressive fluid removing area d in the second extruder to remove the compressive fluid.
The foam sheet of Example 10 was obtained in the same manner as in Example 1 except for the above and evaluated. The results are shown in Table 1.

Example 11

The raw material supplying devices 1 and 2 in the continuous foam sheet manufacturing device 110 illustrated in FIG. 2 supplied the 3 percent by mass filler master batch, polylactic acid resin, and a cross-linking agent. Specifically, 1.67 kg/hr of the 3 percent by mass filler master batch obtained, 8.33 kg/hr of polylactic acid resin (Revode 110, melting point of 160 degrees C, manufactured by Zhejiang Hisun Biomaterials Co., Ltd.) to make the entire amount of flowing the master batch and polylactic acid resin 10 kg/hr and contain 0.5 percent by mass of a filler in an obtained foam sheet, and 0.07 kg/hr (corresponding to 0.7 percent by mass to quantity of the organic component) of glycidyl compound (Joncryl ADR 4368C, manufactured by BASF SE) as cross-linking agent were supplied to the raw material mix-melting area a of the first extruder. Subsequently, the compressive fluid supplying device 3 supplied 0.90 kg/hr (corresponding to 9 percent by mass to a composition) of carbon dioxide as compressive fluid to the compressive fluid supply area b and the supplying system 4 supplied 0.33 kg/hr (corresponding to 3.33 percent by mass to a composition) of hydrofluoroolefin (HFO: trans-1-chloro-3,3,3-trifluoro propene) to the kneading area c, where carbon dioxide and hydrofluoroolefin were kneaded. Next, the resin was cooled down to 135 degrees C at the compressive fluid removing area d in the second extruder to remove the compressive fluid.
The foam sheet of Example 8 was obtained in the same manner as in Example 1 except for the above and evaluated.
The results are shown in Table 1.

Example 12

The foam sheet of Example 12 was obtained in the same manner as in Example 3 except that the surface-treated silica as nucleating agent for foaming was changed to AEROSIL NY50, manufactured by Nippon Aerosil Co., Ltd.
The results are shown in Table 1.

Example 13

The foam sheet of Example 13 was obtained in the same manner as in Example 3 except that the surface-treated silica as nucleating agent for foaming was changed to QSG-100, manufactured by Shin-Etsu Chemical Co., Ltd.
The results are shown in Table 1.

Example 14

The foam sheet of Example 14 was obtained in the same manner as in Example 3 except that the surface-treated silica as nucleating agent for foaming was changed to AEROSIL R816, manufactured by Nippon Aerosil Co., Ltd.
The results are shown in Table 1.

Example 15

The foam sheet of Example 15 was obtained in the same manner as in Example 1 except that the amount of supplied carbon dioxide as compressive fluid was changed to 0.981 kg/hr (corresponding to 9.9 percent by mass to a composition) and the amount of supplied hydrofluoroolefin (HFO: trans-1-chloro-3,3,3-trifluoro propene) was changed to 0.0995 kg/hr (corresponding to 0.1 percent by mass to a composition).

Example 16

The foam sheet of Example 16 was obtained in the same manner as in Example 1 except that cis-1,1,1,4,4,4-hexafluoro-2-butene was used as hydrofluoroolefin.
The results are shown in Table 1.

Example 17

The foam sheet of Example 17 was obtained in the same manner as in Example 3 except that cis- 1, 1, 1,4,4,4-hexafluoro-2-butene was used as hydrofluoroolefin.
The results are shown in Table 1.

Example 18

The foam sheet of Example 18 was obtained in the same manner as in Example 1 except that cis-1,1,1,4,4,4-hexafluoro-2-butene was used as hydrofluoroolefin.
The results are shown in Table 1.

Example 19

The foam sheet of Example 19 was obtained in the same manner as in Example 3 except that trans- 1, 1, 1,4,4,4-hexafluoro-2-butene was used as hydrofluoroolefin.
The results are shown in Table 1.

Comparative Example 1

The foam sheet of Comparative Example 1 was obtained in the same manner as in Example 1 except that HFO was not added and 0.99 kg/hr (10 percent by mass to a composition) of carbon dioxide was supplied as compressive fluid.
The results are shown in Table 1.

Comparative Example 2

The foam sheet of Comparative Example 2 was obtained in the same manner as in Example 3 except that a filler and a cross-linking agent were not used.

The results are shown in Table 1.

Examples 20 and 21

The foam sheets of Examples 20 and 21 were obtained in the same manner as in

Example 3 except that a cross-linking agent was not used.

The results are shown in Table 1.

Table 1

| | Type of resin | Ratio of polylactic acid (percent by mass) | Filler | | | | | Cross-linking agent (percent by mass) | Amount of $CO_2$ added (percent by mass)) |
| | | | Type of filler | pH of filler | Hydrophobicity of filler (percent by mass) | Number average particle diameter ($\mu$m) | Filler (percent by mass) | | |
|---|---|---|---|---|---|---|---|---|---|
| Example 1 | Revode 110 | 98.8 | R202 | 4.1 | 75 | 0.022 | 0.5 | 0.7 | 6.66 |
| Example 2 | Revode 110 | 98.8 | R202 | 4.1 | 75 | 0.022 | 0.5 | 0.7 | 8 |
| Example 3 | Revode 110 | 98.8 | R202 | 4.1 | 75 | 0.022 | 0.5 | 0.7 | 9 |
| Example 4 | Revode 110 | 98.8 | R202 | 4.1 | 75 | 0.022 | 0.5 | 0.7 | 9.5 |
| Example 5 | Revode 110 | 98.8 | R202 | 4.1 | 75 | 0.022 | 0.5 | 0.7 | 9.8 |
| Example 6 | Revode 110 | 98.8 | R202 | 4.1 | 75 | 0.022 | 0.5 | 0.7 | 6.66 |

| | | | | | | | | | |
|---|---|---|---|---|---|---|---|---|---|
| Example 7 | Revode 110 | 98.8 | R202 | 4.1 | 75 | 0.022 | 0.5 | 0.7 | 9 |
| Example 8 | Revode 110 | 98.8 | R202 | 4.1 | 75 | 0.022 | 0.05 | 0.7 | 9 |
| Example 9 | Revode 110 | 98.8 | R202 | 4.1 | 75 | 0.022 | 2.0 | 0.7 | 9 |
| Example 10 | Revode 110 | 98.8 | R202 | 4.1 | 75 | 0.022 | 0.5 | 0.7 | 9 |
| Example 11 | Revode 110 | 98.8 | R202 | 4.1 | 75 | 0.022 | 0.5 | 0.7 | 9 |
| Example 12 | Revode 110 | 98.8 | NY50 | 5.5 | 105 | 0.075 | 0.5 | 0.7 | 9 |
| Example 13 | Revode 110 | 98.8 | QSG-100 | 4.5 | 65 | 0.12 | 0.5 | 0.7 | 9 |
| Example 14 | Revode 110 | 98.8 | R816 | 4.1 | 60 | 0.009 | 0.5 | 0.7 | 9 |
| Example 15 | Revode 110 | 98.8 | R202 | 4.1 | 75 | 0.022 | 0.5 | 0.7 | 9.9 |
| Example 16 | Revode 110 | 98.8 | R202 | 4.1 | 75 | 0.022 | 0.5 | 0.7 | 6.66 |

| | | | | | | | | | |
|---|---|---|---|---|---|---|---|---|---|
| Example 17 | Revode 110 | 98.8 | R202 | 4.1 | 75 | 0.022 | 0.5 | 0.7 | 9 |
| Example 18 | Revode 110 | 98.8 | R202 | 4.1 | 75 | 0.022 | 0.5 | 0.7 | 6.66 |
| Example 19 | Revode 110 | 98.8 | R202 | 4.1 | 75 | 0.022 | 0.5 | 0.7 | 9 |
| Comparative Example 1 | Revode 110 | 98.8 | R202 | 4.1 | 75 | 0.022 | 0.5 | 0.7 | 10 |
| Comparative Example 2 | Revode 110 | 100 | - | - | - | - | - | - | 9 |
| Example 20 | Revode 110 | 99.5 | R202 | 4.1 | 75 | 0.022 | 0.5 | - | 9 |
| Example 21 | Revode 110 | 99.5 | R202 | 4.1 | 75 | 0.022 | 0.5 | - | 9 |

| | Type of resin | HFO | | Average thickness (mm) | Expansion ratio | Proportion of HFO (ppm) | Moldability |
|---|---|---|---|---|---|---|---|
| | | Type of HFO | Proportion of HFO (percent by mass) | | | | |

| | | Trans-1-chloro-3,3,3-trifluoro propene | 3.33 | 2.1 | 10.2 | 2000 | A |
|---|---|---|---|---|---|---|---|
| Example 1 | Revode 110 | Trans-1-chloro-3,3,3-trifluoro propene | 3.33 | 2.1 | 10.2 | 2000 | A |
| Example 2 | Revode 110 | Trans-1-chloro-3,3,3-trifluoro propene | 2 | 2.0 | 12.0 | 1651 | A |
| Example 3 | Revode 110 | Trans-1-chloro-3,3,3-trifluoro propene | 1 | 2.2 | 11.0 | 680 | A |
| Example 4 | Revode 110 | Trans-1-chloro-3,3,3-trifluoro propene | 0.5 | 2.1 | 13.0 | 345 | A |

| | | | | | | | |
|---|---|---|---|---|---|---|---|
| Example 5 | Revode 110 | Trans-1-chloro-3,3,3-trifluoro propene | 0.2 | 2.0 | 12.0 | 150 | A |
| Example 6 | Revode 110 | 1-chloro-2,3,3,3-tetrafluoro propene | 3.33 | 2.2 | 14.0 | 2180 | A |
| Example 7 | Revode 110 | 1-chloro-2,3,3,3-tetrafluoro propene | 1 | 2.1 | 10.3 | 700 | A |
| Example 8 | Revode 110 | Trans-1-chloro-3,3,3-trifluoro propene | 1 | 2.0 | 13.0 | 688 | A |
| Example 9 | Revode 110 | Trans-1-chloro- | 1 | 2.0 | 14.0 | 712 | A |

| | | 3,3,3-trifluoro propene | | | | | |
|---|---|---|---|---|---|---|---|
| Example 10 | Revode 110 | Trans-1-chloro-3,3,3-trifluoro propene | 1 | 0.5 | 5.3 | 716 | A |
| Example 11 | Revode 110 | Trans-1-chloro-3,3,3-trifluoro propene | 1 | 5.0 | 28.0 | 722 | A |
| Example 12 | Revode 110 | Trans-1-chloro-3,3,3-trifluoro propene | 1 | 2.1 | 11.0 | 733 | A |
| Example 13 | Revode 110 | Trans-1-chloro- | 1 | 2.0 | 10.4 | 682 | A |

| | | 3,3,3-trifluoro propene | | | | | |
|---|---|---|---|---|---|---|---|
| Example 14 | Revode 110 | Trans-1-chloro-3,3,3-trifluoro propene | 1 | 2.2 | 11.5 | 679 | A |
| Example 15 | Revode 110 | Trans-1-chloro-3,3,3-trifluoro propene | 0.1 | 2.0 | 12.0 | 77 | B |
| Example 16 | Revode 110 | Cis-1,1,1,4,4,4-hexafluoro-2-butene | 3.33 | 2.2 | 14.5 | 2170 | A |
| Example 17 | Revode 110 | Cis-1,1,1,4,4,4- | 1 | 2.1 | 10.4 | 698 | A |

| | | | | | | | |
|---|---|---|---|---|---|---|---|
| | | hexafluoro-2-butene | | | | | |
| Example 18 | Revode 110 | Trans-1,1,1,4,4,4-hexafluoro-2-butene | 3.33 | 2.2 | 13.5 | 2170 | A |
| Example 19 | Revode 110 | Trans-1,1,1,4,4,4-hexafluoro-2-butene | 1 | 2.1 | 10.1 | 698 | A |
| Comparative Example 1 | Revode 110 | - | - | 2.1 | 10.2 | - | C |
| Comparative Example 2 | Revode 110 | Trans-1-chloro-3,3,3-trifluoro propene | 1 | 2.0 | 9.2 | 678 | C |
| Example 20 | Revode 110 | Trans-1-chloro-3,3,3- | 1 | 2.0 | 10.4 | 666 | B |

| | | | | | | | |
|---|---|---|---|---|---|---|---|
| | | trifluoro propene | | | | | |
| Example 21 | Revode 110 | Trans-1-chloro-3,3,3-trifluoro propene | 1 | 0.4 | 4.5 | 652 | B |

Aspects of the present disclosure are, for example, as follows.

1. A foam sheet contains an aliphatic polyester resin, a nucleating agent for foaming; and hydrofluoroolefin, wherein the nucleating agent accounts for 0.05 to 2 percent by mass of the foam sheet.

2. The foam sheet according to 1 mentioned above, further contains a cross-linking agent.

3. The foam sheet according to 1 or 2 mentioned above, wherein the foam sheet contains hydrofluoroolefin in an amount of 150 ppm or greater.

4. The foam sheet according to any one of 1 to 3 mentioned above, wherein the aliphatic polyester resin comprises polylactic acid.

5. The foam sheet according to any one of 1 to 4 mentioned above, wherein the foam sheet has a thickness of from 0.5 to 5 mm.

6. The foam sheet according to any one of 1 to 5 mentioned above, wherein the expansion ratio is from 5 to 30.

7. The foam sheet according to any one of 1 to 6 mentioned above, wherein the nucleating agent comprises a filler having a hydrophobicity of 50 percent by mass or greater and a pH of 6.5 or less.

8. The foam sheet according to 7 mentioned above, wherein the filler has a pH of from 3.5 to 6.5.

9. The foam sheet according to 7 or 8 mentioned above, wherein the filler has a number average particle diameter of from 5 to 100 nm.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

**Claims**

1. A foam sheet comprising:

   an aliphatic polyester resin;
   a nucleating agent for foaming; and
   hydrofluoroolefin,
   wherein the nucleating agent accounts for 0.05 to 2 percent by mass of the foam sheet.

2. The foam sheet according to claim 1, further comprising a cross-linking agent.

3. The foam sheet according to claim 1 or 2, wherein the foam sheet contains hydrofluoroolefin in an amount of 150 ppm or greater.

4. The foam sheet according to any one of claims 1 to 3, wherein the aliphatic polyester resin comprises polylactic acid.

5. The foam sheet according to any one of claims 1 to 4, wherein the foam sheet has a thickness of from 0.5 to 5 mm.

6. The foam sheet according to any one of claims 1 to 5, wherein an expansion ratio is from 5 to 30.

7. The foam sheet according to any one of claims 1 to 6, wherein the nucleating agent comprises a filler having a hydrophobicity of 50 percent by mass or greater and a pH of 6.5 or less.

8. The foam sheet according to claim 7, wherein the filler has a pH of from 3.5 to 6.5.

9. The foam sheet according to claim 7 or 8, wherein the filler has a number average particle diameter of from 5 to 100 nm.

# FIG. 1

100

COMPRESSIBLE FLUID

PELLET

a   b   c   d   e

# FIG. 2

110

a   b   c   d

Europäisches
Patentamt

European
Patent Office

Office européen
des brevets

**EUROPEAN SEARCH REPORT**

Application Number

EP 23 15 0685

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2021/152388 A1 (RICOH CO LTD [JP]; NEMOTO TAICHI [JP]; NOZAKI CHIYOSHI [JP]) 5 August 2021 (2021-08-05) * paragraph [0045]; claim 2; example 10 * ----- | 1-9 | INV. C08J9/00 C08J9/12 C08J9/14 |
| Y | US 2015/315351 A1 (SHINOHARA MITSURU [JP] ET AL) 5 November 2015 (2015-11-05) * paragraph [0110] * ----- | 1-9 | |
| Y | US 2016/017111 A1 (DELAVIZ YADOLLAH [US] ET AL) 21 January 2016 (2016-01-21) * claims 1,4 * ----- | 1-9 | |
| Y | WO 2021/152387 A1 (RICOH CO LTD [JP]; NEMOTO TAICHI [JP]) 5 August 2021 (2021-08-05) * paragraph [0026] * ----- | 6 | |
| Y | US 2018/251622 A1 (UCHIYAMA KOSUKE [JP] ET AL) 6 September 2018 (2018-09-06) * paragraph [0112] – paragraph [0113] * ----- | 6 | TECHNICAL FIELDS SEARCHED (IPC) C08J |

The present search report has been drawn up for all claims

| Place of search | Date of completion of the search | Examiner |
|---|---|---|
| The Hague | 9 May 2023 | Jegou, Gwénaëlle |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 0685

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2023

| Patent document cited in search report | | Publication date | Patent family member(s) | | Publication date |
|---|---|---|---|---|---|
| WO 2021152388 | A1 | 05-08-2021 | CN 115003738 A | | 02-09-2022 |
| | | | EP 4097171 A1 | | 07-12-2022 |
| | | | US 2023076268 A1 | | 09-03-2023 |
| | | | WO 2021152388 A1 | | 05-08-2021 |
| US 2015315351 | A1 | 05-11-2015 | EP 2940070 A1 | | 04-11-2015 |
| | | | JP 6356477 B2 | | 11-07-2018 |
| | | | JP 2015212323 A | | 26-11-2015 |
| | | | US 2015315351 A1 | | 05-11-2015 |
| US 2016017111 | A1 | 21-01-2016 | BR 112017000892 A2 | | 21-11-2017 |
| | | | CA 2955293 A1 | | 21-01-2016 |
| | | | CN 106661260 A | | 10-05-2017 |
| | | | EP 3169723 A1 | | 24-05-2017 |
| | | | US 2016017111 A1 | | 21-01-2016 |
| | | | WO 2016011219 A1 | | 21-01-2016 |
| WO 2021152387 | A1 | 05-08-2021 | CN 115023458 A | | 06-09-2022 |
| | | | EP 4097172 A1 | | 07-12-2022 |
| | | | US 2023104247 A1 | | 06-04-2023 |
| | | | WO 2021152387 A1 | | 05-08-2021 |
| US 2018251622 | A1 | 06-09-2018 | CN 107922662 A | | 17-04-2018 |
| | | | EP 3345959 A1 | | 11-07-2018 |
| | | | JP 6691754 B2 | | 13-05-2020 |
| | | | JP 2017048277 A | | 09-03-2017 |
| | | | US 2018251622 A1 | | 06-09-2018 |
| | | | WO 2017038881 A1 | | 09-03-2017 |

EPO FORM P0459

For more details about this annex : see Official Journal of the European Patent Office, No. 12/82

## REFERENCES CITED IN THE DESCRIPTION

**Patent documents cited in the description**

- JP 2013506032 W
- JP 6265597 B
- JP 4864714 B

**Non-patent literature cited in the description**

- Structure, Properties, Biodegradability of Aliphatic Polyesters. Polymer. June 2001, vol. 50, 374-377